# EUROPEAN PATENT APPLICATION

(11) **EP 4 635 701 A1**
(43) Date of publication of application: **22.10.2025**
(21) Application number: 23903300.4
(22) Date of filing: 30.11.2023
(51) Int. Cl.: B29B 11/16, B65G 47/46, B65G 47/58, B29K 307/04

(54) **METHOD FOR PRODUCING SHEET PREPREG, METHOD FOR SUPPLYING FIBER STARTING MATERIAL, AND SHEET PREPREG**

(30) Priority: 16.12.2022 JP 2022200806
(71) Applicant: Mitsubishi Chemical Corporation, Tokyo 100-8251 (JP)
(72) Inventor: MIYAUCHI, Akira, Tokyo 100-8251 (JP); IKEDA, Masashi, Tokyo 100-8251 (JP); TSUJIKAWA, Kazuki, Tokyo 100-8251 (JP); ISHIKAWA, Takeshi, Tokyo 100-8251 (JP); MATSUI, Jun, Tokyo 100-8251 (JP); SAMEJIMA, Tadao, Tokyo 100-8251 (JP); MAENO, Kazuhiro, Tokyo 100-8251 (JP)
(74) Representative: Vossius & Partner Patentanwälte Rechtsanwälte mbB
(86) International application number: PCT/JP2023/042889
(87) International publication number: WO 2024/128010

(57) **Abstract**

A method for continuously producing a sheet prepreg containing a carbon fiber mat and a thermosetting resin composition impregnated therein, including: dropping a fiber raw material comprising carbon fiber bundles having a bundle length in the range of 5 mm or more and 100 mm or less onto a first carrier film while running the first carrier film along its longitudinal direction to form the carbon fiber mat; and, before dropping the fiber raw material onto the first carrier film, transporting the fiber raw material by a first belt conveyor to a discharge end of the first belt conveyor, the first belt conveyor having a conveying surface with an uneven surface and an upwardly sloping section, wherein a width direction of the first carrier film and a width direction of the first conveyor belt are parallel to each other.

## Description

### Technical Field

The present invention mainly relates to a method for producing a sheet prepreg and a method for supplying fiber raw material.

### Background Art

Carbon fiber sheet molding compound (CF-SMC) is known as a sheet prepreg that uses a carbon fiber mat made of short carbon fiber bundles as a reinforcing material.

In the conventional method for producing CF-SMC, an impregnation machine equipped with a chopper is used. The chopper is installed above a running path for a carrier film that is supplied to a impregnation section of the impregnation machine. By cutting a continuous carbon fiber bundle unwound from a roving with a chopper, short carbon fiber bundles are produced, and the short carbon fiber bundles fall directly from the chopper onto the carrier film without being collected, whereby a carbon fiber mat is formed (Patent Literature 1).

### Citation List

### Patent Literature

Patent Literature 1: JP H1-163218 A

### Summary of Invention

### Technical Problem

An object of the present invention is to provide a method for continuously producing sheet prepregs using a fiber raw material prepared in advance that contains short carbon fiber bundles having a bundle length in the range of 5 mm or more and 100 mm or less, and to provide a method for supplying a fiber raw material that can be preferably used in the producing method.

A person skilled in the art will understand from the following explanation that the "pre-prepared fiber raw material" referred to here is a bulk product that does not require cutting with a chopper and can be used as is to form a carbon fiber mat.

Another object of the present invention is to provide a long sheet prepreg comprising a carbon fiber mat containing self-assembled carbon fiber bundles having a bundle length in the range of 5 mm or more and 100 mm or less, and being impregnated with a thermosetting resin composition, wherein a variation in weight per unit length along a length direction is suppressed to a level that does not cause practical problems.

### Solution to Problem

To continuously produce sheet prepregs using pre-prepared fiber raw materials containing short carbon fiber bundles with bundle lengths in the range of 5 mm or more and 100 mm or less, a technology is required to supply a fixed amount of such fiber raw materials. However, since such fiber raw materials are prone to bridging, it is not easy to supply a fixed amount using a hopper feeder. The present invention was achieved by research conducted by the present inventors to solve this problem.

According to one aspect of the present invention, there is provided a method for continuously producing a sheet prepreg comprising a carbon fiber mat and a thermosetting resin composition impregnated therein, comprising: dropping a fiber raw material comprising carbon fiber bundles having a bundle length in the range of 5 mm or more and 100 mm or less onto a carrier film while running the carrier film along its longitudinal direction to form the carbon fiber mat; and, before dropping the fiber raw material onto the first carrier film, transporting the fiber raw material by a belt conveyor to a discharge end of the belt conveyor, the first belt conveyor having a conveying surface with an uneven surface and an upwardly sloping section, wherein a width direction of the first carrier film and a width direction of the conveyor belt are parallel to each other.

According to another aspect of the present invention, there is provided a method for continuously and quantitatively supplying a fiber raw material containing carbon fiber bundles having a bundle length in the range of 5 mm or more and 100 mm or less, the method comprising transporting the fiber raw material by a belt conveyer provided with a conveyer belt to a discharge end of the belt conveyor, the conveyor belt having a conveying surface with an uneven surface and an upwardly sloping section.

According to yet another aspect of the present invention, there is provided a sheet prepreg having a length direction and a width direction, in which a carbon fiber mat containing self-assembled carbon fiber bundles having a bundle length in the range of 5 mm or more and 100 mm or less is impregnated with a thermosetting resin composition, and the coefficient of variation of the weight per unit length of the sheet prepreg is 10% or less, the coefficient of variation being a value obtained by dividing the standard deviation by the average value, and being based on four samples each having a length of 0.3 m taken from the sheet prepreg without any intervals in the length direction.

According to yet another aspect of the present invention, there is provided a sheet prepreg having a length direction and a width direction and a length of 7.2 m or more, in which a carbon fiber mat containing self-assembled carbon fiber bundles having a bundle length in the range of 5 mm or more and 100 mm or less is impregnated with a thermosetting resin composition, and the coefficient of variation of the weight per unit length of the sheet prepreg is 5% or less, the coefficient of variation being a value obtained by dividing a standard deviation by an average value, and being based on six samples each having a length of 1.2 m taken from the sheet prepreg without any intervals in the length direction.

### Advantageous Effects of Invention

According to one embodiment of the present invention, there is provided a method for continuously producing sheet prepregs using a fiber raw material prepared in advance, including short carbon fiber bundles having a bundle length in the range of 5 mm or more and 100 mm or less, and a method for supplying a fiber raw material that can be preferably used in the production method.

According to one embodiment of the present invention, there is provided a long sheet prepreg, in which a carbon fiber mat containing self-assembled carbon fiber bundles having a bundle length in the range of 5 mm or more and 100 mm or less is impregnated with a thermosetting resin composition, and in which the variation in weight per unit length along the length is suppressed to a level that does not cause practical problems.

### Brief Description of Drawings

[Fig. 1] Fig. 1 is a schematic diagram showing a sheet prepreg production apparatus.
[Fig. 2] Fig. 2 is a schematic diagram showing a cross section obtained when a conveyor belt is cut perpendicular to the width direction.
[Fig. 3] Fig. 3 is a side view of a spiked lattice belt, in other words a schematic diagram showing a spiked lattice belt viewed from the width direction.
[Fig. 4] Fig. 4 is a schematic diagram showing a lattice made up of horizontal rods.
[Fig. 5] Fig. 5(a) and Fig. 5(b) are each plan views showing chopped fiber bundles.
[Fig. 6] Fig. 6 is a schematic diagram of a self-assembled carbon fiber bundle.
[Fig. 7] Fig. 7(a) and Fig. 7(b) are each photographs showing the appearance of a self-assembled carbon fiber bundle.
[Fig. 8] Fig. 8 is a schematic diagram showing an example of a position from which samples are taken from a sheet prepreg to obtain a coefficient of variation A described below.
[Fig. 9] Fig. 9 is a schematic diagram showing an example of a position from which samples are taken from a sheet prepreg to obtain a coefficient of variation B described below.

### Description of Embodiments

### 1. Sheet prepreg producing method

One embodiment of the present invention relates to a method for continuously producing a sheet prepreg in which a carbon fiber mat is impregnated with a thermosetting resin composition, and includes: forming the carbon fiber mat by dropping a fiber raw material containing carbon fiber bundles having a bundle length in the range of 5 mm or more and 100 mm or less onto a carrier film while running the carrier film along its longitudinal direction; and transporting the fiber raw material to a discharge end by a belt conveyor having an uneven conveying surface and an upwardly sloping section before dropping the fiber raw material onto the carrier film. Here, the width direction of the carrier film and the width direction of the conveyor belt are parallel to each other.

### 1.1. Sheet prepreg producing device

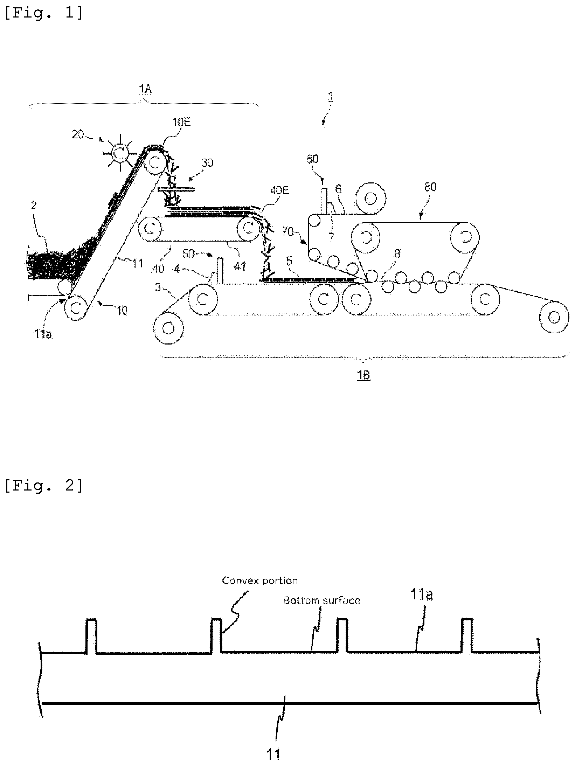

An example of a sheet prepreg producing device that can be preferably used when producing a sheet prepreg by the above producing method according to the embodiment is shown in Fig. 1.

Referring to Fig. 1, the sheet prepreg producing device 1 is roughly divided into a fiber raw material supply section 1A and an impregnation section 1B.

The fiber material supply section 1A includes a first belt conveyor 10, a scraping roller 20, a horizontal rod 30, and a second belt conveyor 40.

The impregnation section 1B includes a first coater 50, a second coater 60, a laminating machine 70, and an impregnation machine 80.

The first belt conveyor 10 is an example of a belt conveyor with an upwardly sloping section, and has only an upwardly sloping section. In a modified example, the first belt conveyor 10 may have a horizontal section on either or both the upstream and downstream sides of the upwardly sloping section.

The conveying surface 11a of the conveyor belt 11 of the first belt conveyor 10, i.e., the surface on which the fiber material 2 is placed, is an uneven surface. This is to prevent the fiber material 2 to be conveyed from sliding down the conveying surface 11a of the conveyor belt 11 on the upwardly sloping section of the first belt conveyor 10.

The conveying surface 11a of the conveyor belt 11 may be an uneven surface having a concave portion having a bottom surface and a convex portion protruding from the bottom surface, as shown in the cross-sectional view of Fig. 2, for example. In this case, the proportion of the convex portion in a plan view of the uneven surface is preferably 50% or less, more preferably 10% or less, in terms of area.

In one example, the convex portion in such an uneven surface may be a wall perpendicular to the bottom surface of the concave portion. Such a wall may be parallel to the width direction of the conveyor belt.

In another example, the convex portion in such an uneven surface may be columnar. The columnar convex portion may be perpendicular to the bottom surface of the concave portion or may be inclined toward the running direction of the first conveyor belt.

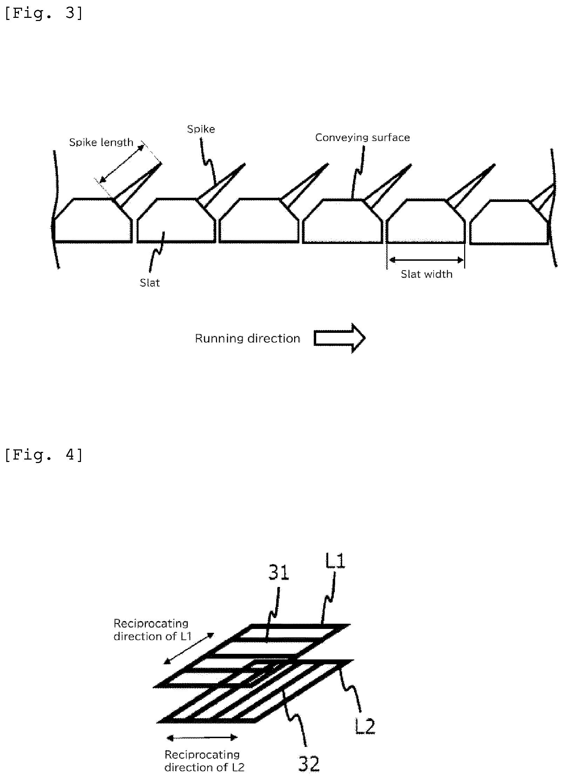

In a preferred example, the conveyor belt 11 may be a spiked lattice belt. In other words, the first belt conveyor 10 may be a spiked lattice conveyor. Fig. 3 is a view of a typical spiked lattice belt viewed from the width direction. In the spiked lattice belt, the slat width is preferably 5 to 30 mm, and the spike length is preferably 5 to 20 mm.

In the spiked lattice belt, the surface with the spikes is the conveying surface.

The scraping roller 20 is an example of a scraping means for scraping off a part of the fiber raw material 2 conveyed by the first belt conveyor 10, and is optionally provided in the middle or at the top end of the upwardly sloping section of the first belt conveyor 10.

The scraping roller 20 has a rotation axis parallel to a T direction of the first belt conveyor 10, and a cylindrical part having a rotation axis as a central axis thereof. A number of blades parallel to the rotation axis are arranged on the outer circumferential surface of the cylindrical part.

Here, the T direction of the belt conveyor means a direction perpendicular to the conveying direction of the belt conveyor and horizontal, and usually coincides with the width direction of the conveyor belt of the belt conveyor.

The horizontal rod 30 is an example of a dispersion means for dispersing the fiber raw material 2 dropping from the discharge end 10E of the first belt conveyor 10, and is optionally arranged below the discharge end 10E.

The horizontal rod 30 is a rod supported so that its longitudinal direction is horizontal, and its cross-sectional shape is not limited to a circle, but may be a polygon such as a triangle, a rectangle, or a hexagon.

The horizontal rod 30 is reciprocated in a horizontal plane along a direction perpendicular to its longitudinal direction by a drive mechanism (not shown).

Normally, a lattice is formed by multiple horizontal rods 30. In other words, multiple horizontal rods 30 are arranged at equal intervals in the same plane.

In a preferred embodiment, as shown in Fig. 4, the first lattice L1 and the second lattice L2 are arranged so as to overlap each other in the vertical direction. The first lattice L1, which is made up of a plurality of horizontal rods 31, is arranged so that the horizontal rods 31 are perpendicular to the T direction of the first belt conveyor 10. The second lattice L2, which is made up of a plurality of horizontal rods 32, is arranged so that the horizontal rods 32 are parallel to the T direction of the first belt conveyor 10. Either the first lattice L1 or the second lattice L2 may be on top or on the bottom.

The second belt conveyor 40 is a horizontal belt conveyor having a horizontal transport path, and is optionally arranged downstream of the first belt conveyor 10. The T direction of the second belt conveyor 40 is the same as the T direction of the first belt conveyor 10.

It is preferable, but not essential, that the transport path of the second belt conveyor 40 be horizontal. Even if the second belt conveyor 40 has a slope, it is acceptable as long as the slope is not so steep that the fiber raw material 2 on the conveyor belt 41 moves due to gravity.

The fiber raw material 2 falling from the discharge end 10E of the first belt conveyor 10 falls onto the second belt conveyor 40 and is transported toward the discharge end 40E.

The belt running speed v₂ of the second belt conveyor 40 is preferably equal to or lower than the belt running speed v₁ of the first belt conveyor 10, and more preferably lower than the belt running speed v₁ of the first belt conveyor 10.

The discharge end 40E of the second belt conveyor 40 is disposed above the path of the first carrier film 3 which runs along its own longitudinal direction.

The fiber raw material 2 falls from the discharge end 40E of the second belt conveyor 40 onto the first carrier film 3, forming a carbon fiber mat 5 on the first carrier film 3. The width direction of the first carrier film 3 is parallel to the T direction of the second belt conveyor 40. In the area where the fiber raw material 2 falls, the upper surface of the first carrier film 3 is held horizontal.

The running speed v₃ of the first carrier film 3 is preferably equal to or lower than the belt running speed v₂ of the second belt conveyor 40, and more preferably lower than the belt running speed v₂ of the second belt conveyor 40.

When the second belt conveyor 40 is not provided, the fiber raw material 2 is dropped from the discharge end 10E of the first belt conveyor 10 onto the first carrier film 3 to form a carbon fiber mat 5. In such a case, the running speed v₃ of the first carrier film 3 is preferably equal to or lower than the belt running speed v₁ of the first belt conveyor 10, and more preferably lower than the belt running speed v₁ of the first belt conveyor 10.

The first coater 50 is provided to apply the resin paste 4 to the upper surface of the first carrier film 3 before the carbon fiber mat 5 is formed.

The second coater 60 is provided to apply the resin paste 7 to the second carrier film 6.

The laminating machine 70 is disposed upstream of the impregnation machine 80, and is provided to gradually bring the first carrier film 4 and the second carrier film 6 closer to each other and laminate them to form the laminate 8.

The impregnation machine 80 is provided with two belt conveyors, one above the other, to convey the laminate 8 sandwiched between two conveyor belts from above and below, and is provided with rolls to pressurize the laminate 8 together with the conveyor belts.

### 1.2. Fiber raw material

In the producing method of the sheet prepreg according to the embodiment, a fiber raw material containing carbon fiber bundles having a bundle length in the range of 5 mm or more and 100 mm or less is used as the raw material for the carbon fiber mat. Such a collection of carbon fiber bundles is prone to a bridge phenomenon, so it is difficult to supply a fixed amount using a supply device equipped with a hopper. In addition, such a collection of carbon fiber bundles is difficult to supply a fixed amount using a screw feeder or a vibrating feeder, because the carbon fiber bundles tend to become entangled when compressed.

In the method according to the embodiment, a fixed amount of fiber raw material containing carbon fiber bundles having a bundle length within the above range is realized by using a belt conveyor having a conveyor belt with an uneven conveying surface and an upwardly sloping section.

The problem of difficulty in supplying a fixed amount using a hopper feeder, screw feeder, or vibrating feeder becomes prominent in fiber raw materials containing carbon fiber bundles having a bundle length within the range of 5 to 100 mm, particularly at the higher end of the range. Therefore, the method according to the embodiment is more advantageous when the fiber raw material contains carbon fiber bundles having a bundle length of 10 mm or more, and further when the fiber raw material contains carbon fiber bundles having a bundle length of 20 mm or more.

In one example, all of the carbon fiber bundles contained in the fiber raw material may have bundle lengths of 100 mm or less, 90 mm or less, 80 mm or less, 70 mm or less, 60 mm or less, 50 mm or less, 40 mm or less, or 30 mm or less. From the viewpoint of increasing the fluidity exhibited by the sheet prepreg to be produced when used in molding, it is preferable that all of the carbon fiber bundles contained in the fiber raw material have bundle lengths of 60 mm or less, more preferably 40 mm or less, and even more preferably 30 mm or less.

One example of carbon fiber bundles having a bundle length of 5 to 100 mm contained in the fiber raw material is chopped carbon fiber bundles. Chopped carbon fiber bundles are also called carbon fiber chopped strands, and are produced by cutting continuous carbon fiber bundles to a predetermined length between 5 mm and 100 mm. Chopped carbon fiber bundles generally have a flat shape.

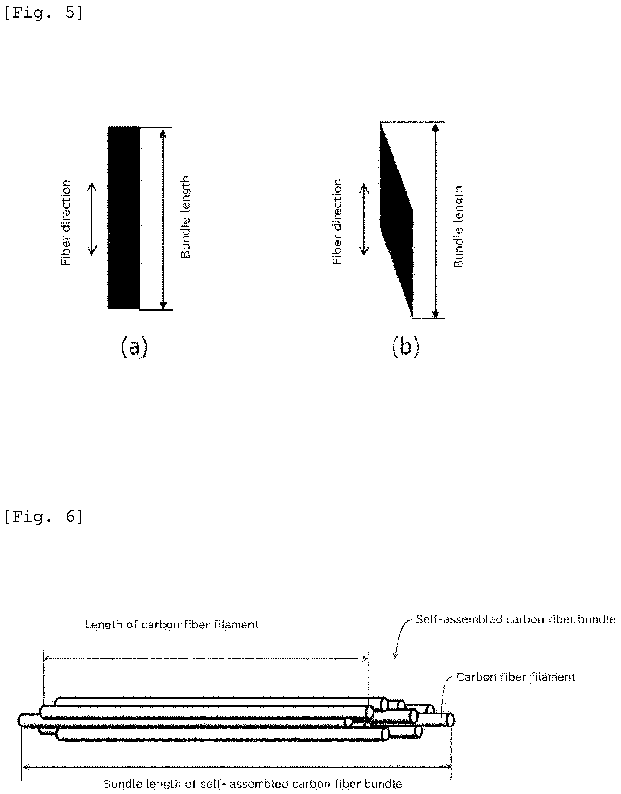

The planar shape of the chopped carbon fiber bundle can be various. In the chopped carbon fiber bundle shown in Fig. 5(a) having a rectangular planar shape, the bundle length is approximately equal to the length of the carbon fiber filaments contained in the chopped carbon fiber bundle. The bundle length of the chopped carbon fiber bundle obtained by cutting continuous carbon fibers diagonally shown in Fig. 5(b) is longer than the length of the carbon fiber filaments contained in the chopped carbon fiber bundle.

Another example of a carbon fiber bundle having a bundle length of 5 to 100 mm contained in the fiber raw material is a self-assembled carbon fiber bundle (hereinafter sometimes abbreviated as "SACFB"). SACFB is formed through a process in which multiple short carbon fibers assemble to form a bundle. The bundle length of SACFB is generally longer than the average length of the carbon fiber filaments contained in it, as shown in Fig. 6. In one example, the bundle length of the SACFB may exceed twice the length of the longest carbon fiber filament contained therein.

The number of carbon fiber filaments contained in one SACFB (bundle size of the SACFB) is preferably within the range of 1,500 to 10,000, but is not limited thereto.

The carbon fibers constituting the SACFB may all be non-thermally degraded carbon fibers, or may be partially non-thermally degraded carbon fibers and the remaining portion thermally degraded carbon fibers. The carbon fibers constituting the SACFB may all be thermally degraded carbon fibers.

The non-thermally degraded carbon fibers are typically virgin carbon fibers.

Thermal degraded carbon fibers are typically recycled carbon fibers recovered from waste CFRP (carbon fiber reinforced plastic), and have been thermally degraded in the process of pyrolyzing and removing the matrix resin.

It is preferable that SACFB contains only carbon fiber as a fiber component, but it is acceptable to contain fibers other than carbon fiber, such as glass fiber, unless it causes any particular problems. The content of fibers other than carbon fiber in SACFB is preferably less than 10 wt%, more preferably less than 5 wt%, and even more preferably less than 1 wt%. This is because fibers other than carbon fiber are inferior to carbon fiber in their effectiveness as reinforcing materials for FRP.

SACFB made of virgin carbon fiber can be manufactured, for example, by using chopped carbon fiber bundles as a raw material. The fiber filament length of the chopped carbon fiber bundle is preferably 5 mm or more, and may be 10 mm or more, and is preferably 60 mm or less, more preferably 40 mm or less, and even more preferably 30 mm or less, and may be 20 mm or less.

When producing SACFB from chopped carbon fiber, first, the chopped carbon fiber bundle is unbundled to form fluffy carbon fiber. The chopped carbon fiber bundles can be debundled by, for example, putting only the chopped carbon fiber bundles into an agitation mixer such as a Henschel mixer and agitating them in a dry state. The fluffy carbon fibers are then mixed with a bundling liquid to spontaneously bundle the short carbon fibers that make up the fluffy carbon fibers. After bundling, the liquid components in the bundling liquid are evaporated and removed to obtain a SACFB. According to this method, most of the carbon fiber filaments contained in the chopped carbon fiber bundles participate in the formation of the SACFB while maintaining their length.

A preferred liquid component contained in the bundling liquid is water. The strong surface tension of water strongly promotes bundling of the short carbon fibers by the capillary effect. The amount of the bundling liquid used can be, for example, 20 to 80 parts by weight per 100 parts by weight of the short carbon fibers.

An organic binder can be added to the bundling liquid as a dispersoid or solute. A sizing agent contained in the raw virgin carbon fiber bundles may remain in the SACFB while retaining its ability as an organic binder. Examples of the organic binders include, but are not limited to, epoxy resins, unsaturated polyester resins, vinyl ester resins, polyurethane resins, and polyamide resins.

There is no limit to the method for mixing the fluffy carbon fibers and the bundling liquid. Stirring is preferred for efficient mixing in a short time. For stirring, a powder stirrer known as a Henschel mixer can be preferably used. Alternatively, a drum mixer that rotates a drum-like container can be used to mix the fluffy carbon fibers and the bundling liquid.

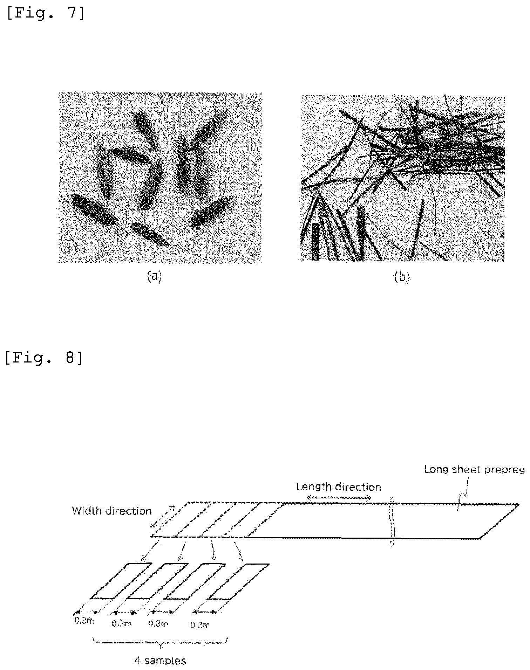

The shape of the SACFB may be spindle-shaped, needle-shaped, wire-shaped, etc. Photographs of spindle-shaped SACFB and wire-shaped SACFB are shown in Figs. 7(a) and (b), respectively.

Wire-shaped SACFB is particularly prone to bridging, making it difficult to feed it in a fixed amount using a hopper feeder, screw feeder, or vibrating feeder. Therefore, the method according to the embodiment is particularly advantageous when wire-shaped SACFB is included.

In the above-described method for producing SACFB, all or part of the virgin carbon fiber raw material can be replaced with recycled carbon fiber.

Suitable examples of recycled carbon fiber are CFRP products molded from CF-SMC and carbon fibers recovered from scraps of CF-SMC. For example, the above-mentioned products or scraps are dry-distilled at a temperature of preferably 600°C or higher, and then heated in an oxidizing atmosphere to, for example, 550°C or higher, preferably 600°C or higher, to completely pyrolyze the matrix resin, leaving behind fluffy recycled carbon fiber.

Since chopped carbon fiber bundles with a bundle length of 60 mm or less are usually used in the production of CF-SMC, fluffy recycled carbon fibers recovered from CFRP products molded from CF-SMC or scraps of CF-SMC have a filament length of 60 mm or less and can be preferably used as a raw material for SACFB.

Recycled carbon fibers are not limited to those derived from SMC. Recycled carbon fibers recovered from CFRP products molded using various prepregs including UD prepregs, fabric prepregs, and tow prepregs, and recycled carbon fibers recovered from CFRP products manufactured using methods that do not use prepregs, including the RTM method, VaRTM method, filament winding method, and pultrusion method, can also be preferably used as a raw material for SACFB by cutting the filament length to 60 mm or less before, during, or after the recovery process.

The fiber raw material used in the producing method of the sheet prepreg according to the embodiment may contain only chopped carbon fiber bundles, or may contain only SACFB. In the former case, the fiber raw material does not contain carbon fiber filaments longer than the carbon fibers contained in the chopped carbon fiber bundles. In the latter case, the fiber raw material does not contain carbon fiber filaments longer than the carbon fibers contained in the SACFB.

In one example, 50 wt% or more, 60 wt% or more, 70 wt% or more, 80 wt% or more, 90 wt% or more, or 95 wt% or more of the fiber raw material may be carbon fiber bundles having a bundle length in the range of 5 mm or more and 100 mm or less.

Examples of components other than carbon fiber bundles having a bundle length in the range of 5 mm or more and 100 mm or less that the fiber raw material may contain include carbon fiber bundles (SACFB or chopped carbon fiber bundles) having a bundle length of less than 5 mm, as well as carbon fiber agglomerates in which the carbon fibers contained are not formed into bundles. For example, carbon fibers having a short filament length of 0.3 mm or less tend to form agglomerates without bundling when wetted with liquid and aggregated.

The fiber raw material may be contaminated with foreign matter contained in the recycled carbon fiber used as the raw material for SACFB. Examples of such foreign matter include glass fiber and metal pieces.

Recycled carbon fiber may account for 50 wt% or more, 60 wt% or more, 70 wt% or more, 80 wt% or more, 90 wt% or more, or 95 wt% or more of the carbon fiber contained in the fiber raw material.

From the viewpoint of increasing the fluidity exhibited by the sheet prepreg to be manufactured when used in molding, it is preferable that all fibers contained in the fiber raw material, including carbon fiber, have a filament length of 50 mm or less, more preferably a filament length of 40 mm or less, and even more preferably a filament length of 30 mm or less.

### 1.3. Manufacturing method of sheet prepreg

The producing method of sheet prepreg according to the embodiment will be described below using the sheet prepreg producing device 1 shown in Fig. 1 as an example.

A fiber raw material 2 supplied to the bottom of a first belt conveyor 10 by a non-limiting method is transported by the first belt conveyor 10 toward a discharge end 10E, which is the end of the upwardly sloping section.

The amount of fiber raw material 2 that reaches the discharge end 10E of the first belt conveyor 10 per unit time is limited by the inclination of the upwardly sloping section being sufficiently steep. This is because the amount of the fiber raw material 2 that passes through the upwardly sloping section while remaining on the conveying surface 11a of the conveyor belt 11 is limited. The amount of fiber raw material 2 that can remain on the conveying surface 11a of the conveyor belt 11 in the upwardly sloping section is determined by the balance between the frictional force acting between the carbon fiber bundles contained in the fiber raw material 2 and gravity.

Since there is an upper limit to the amount of fiber raw material 2 that can reach the discharge end 10E of the first belt conveyor 10, the amount of fiber raw material 2 discharged from the discharge end 10E of the first belt conveyor 10 per unit time is constant. In other words, a fixed amount of the fiber raw material 2 can be supplied to the downstream side of the first belt conveyor 10.

By rotating a scraping roller 20, which is optionally arranged, the variation in the amount of the fiber raw material 2 that reaches the discharge end 10E of the first belt conveyor 10 per unit time can be further reduced. When the height of the fiber raw material 2 on the first conveyor belt 11 exceeds the gap between the scraping roller 20 and the first conveyor belt 11, part of the fiber raw material 2 is scraped off by the scraping roller 20.

By reciprocating an optional horizontal rod 30 in a horizontal plane along a direction perpendicular to its longitudinal direction, the fiber raw material 2 can be dropped evenly onto the second belt conveyor 40.

When the belt running speed v₂ of the second belt conveyor 40 is lower than the belt running speed v₁ of the first belt conveyor 10, the variation in the amount of fiber raw material 2 transported by the second belt conveyor 40 per unit time can be smaller than the variation in the amount of fiber raw material 2 discharged from the first belt conveyor 10 per unit time.

The fiber raw material 2 falls from a discharge end 40E of a second belt conveyor 40 onto a first carrier film 3 traveling underneath, and forms a carbon fiber mat 5 on the first carrier film 3.

When the running speed v3 of the first carrier film 3 is lower than the belt running speed v₂ of the second belt conveyor 40, the variation in the amount of fiber raw material 2 transported by the first carrier film 3 per unit time can be smaller than the variation in the amount of the fiber raw material 2 discharged from the second belt conveyor 40 per unit time. Here, the amount of fiber raw material 2 transported by the first carrier film 3 per unit time can be rephrased as the weight of the carbon fiber mat 5 per unit length along the running direction of the first carrier film 3.

Before the carbon fiber mat 5 is formed, a resin paste 4 is applied by a first coater 50 to the upper surface of the first carrier film 3 pulled out from the roll.

The resin paste 4 is made of a thermosetting resin composition and may contain, as a base resin, one or more thermosetting resins selected from the group consisting of vinyl ester resins (also known as epoxy acrylate resins), unsaturated polyester resins, epoxy resins, and phenolic resins.

The resin paste may contain a hardener, as well as a polymerization inhibitor, a thickener, a reactive diluent, a low-shrinkage agent, a flame retardant, an antibacterial agent, and the like, if necessary.

The viscosity of the resin paste is preferably 0.1 Pa·s or more and less than 10 Pa·s, more preferably 0.2 Pa·s or more and less than 5 Pa·s, and even more preferably 0.3 Pa·s or more and less than 1 Pa·s. In one example, the resin paste may be lightly warmed so that the viscosity falls within the above preferred range.

In a separate process, a resin paste 7 having the same composition as the resin paste 4 is applied to one side of a second carrier film 6 using a second coater 60.

After the carbon fiber mat 5 is formed, a lamination machine 70 is used to form a laminate 8 in which the first carrier film 3 and the second carrier film 6 are bonded together with the carbon fiber mat 5 sandwiched between them, with the sides coated with the resin pastes 4 and 7 facing each other.

The laminate 8 is pressurized by an impregnator 80, so that the carbon fiber mat 5 is impregnated with the resin pastes 4 and 7 to form an impregnated carbon fiber mat.

The impregnated carbon fiber mat is wound up on a bobbin while sandwiched between the first carrier film 3 and the second carrier film 6. The impregnated carbon fiber mat wound up on the bobbin is thickened as necessary to complete the sheet prepreg. The impregnated carbon fiber mat may be folded and stored in a case, instead of being wound up on a bobbin to form a roll.

In a modified embodiment, the second belt conveyor 40 may be omitted, and the fiber raw material 2 may be dropped onto the first carrier film 3 from the discharge end 10E of the first belt conveyor 10 to form the carbon fiber mat 5.

### 1.4. Long Sheet Prepreg

By using the method for producing a sheet prepreg according to the embodiment, it is possible to produce a long sheet prepreg in which a carbon fiber mat containing SACFB having a bundle length in the range of 5 mm or more and 100 mm or less is impregnated with a thermosetting resin composition, and in which the variation in weight per unit length along the length is suppressed to a level that does not cause practical problems. Such a long sheet prepreg is one embodiment of the present invention. For convenience, this long sheet prepreg according to the embodiment will be simply called a long sheet prepreg below.

In the long sheet prepreg produced using the method for producing a sheet prepreg according to the embodiment, its length direction is parallel to the running direction of the carrier film used in producing the long sheet prepreg, and its width direction is parallel to the width direction of the carrier film.

The long sheet prepreg is transported or stored in a rolled or folded state. The length of the long sheet prepreg may be determined so long as it does not cause any problems during the process, and is not limited thereto. For example, the length may be within the range of 5m to 10m, 10m to 30m, 30m to 50m, 50m to 70m, 70m to 100m, 100m to 150m, or 150m to 200m.

The width of the long sheet prepreg may be set appropriately depending on the purpose of use, and is not limited thereto. For example, the width is usually within the range of 0.3m to 3m, preferably 0.5m to 2m, and may be within the range of 1m to 1.5m.

In evaluating the variation in weight per unit length along the length of the long sheet prepreg, four samples each having a length of 0.3m are taken without any intervals in the length direction, and the coefficient of variation of weight per unit length obtained from the measurement of the four samples (hereinafter referred to as "coefficient of variation A"), i.e., the value obtained by dividing the standard deviation by the average value, can be used as an index. The smaller the coefficient of variation A, the smaller the variation in weight per unit length along the length direction of the long sheet prepreg.

Fig. 8 shows an example of the positions at which four samples are taken to obtain the coefficient of variation A. Each sample is weighed, and the weight per unit length of each of the four samples is obtained by dividing the weight by the length of 0.3 m. As shown in the example of Fig. 8, the four samples can be taken from the vicinity of one end of the long sheet prepreg.

In the long sheet prepreg, the coefficient of variation A can be 10% or less, further 8% or less, further 6% or less, further 5% or less, or even 4% or less. The coefficient of variation A is preferably as close to 0% as possible, but in practice it may be 0.01% or more, or even 0.1% or more.

When the long sheet prepreg has a length of 7.2 m or more, in order to evaluate the variation in weight per unit length along its length, six samples, each having a length of 1.2 m, may be taken without any intervals in the length direction, and the coefficient of variation of weight per unit length obtained from the measurement of the six samples (hereinafter referred to as "coefficient of variation B") may be used as an index.

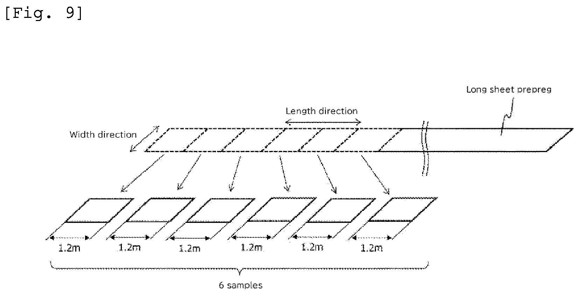

Fig. 9 shows an example of the positions where the six samples are taken. The weight of each sample is divided by the length of 1.2 m to obtain the weight per unit length of each of the six samples. As shown in the example of Fig. 9, the six samples can be taken from the vicinity of one end of the long sheet prepreg.

In the long sheet prepreg, the coefficient of variation B can be 5% or less, further 4% or less, further 3% or less, further 2% or less, and further 1% or less. The coefficient of variation B is preferably closer to 0% as possible, but in practical use, it may be 0.01% or more, or even 0.1% or more.

At least a part of the SACFB contained in the carbon fiber mat impregnated with the thermosetting resin composition may have a bundle length in the range of 10 mm to 100 mm, and further, may have a bundle length in the range of 20 mm to 100 mm.

The carbon fiber bundles contained in the carbon fiber mat impregnated with the thermosetting resin composition, including the SACFB, may all have a bundle length of 100 mm or less, 90 mm or less, 80 mm or less, 70 mm or less, 60 mm or less, 50 mm or less, 40 mm or less, or 30 mm or less.

From the viewpoint of increasing the fluidity exhibited when the long sheet prepreg is used for molding, it is preferable that all the carbon fiber bundles contained in the carbon fiber mat have a bundle length of 60 mm or less, more preferably a bundle length of 40 mm or less, and even more preferably a bundle length of 30 mm or less.

SACFB having a bundle length within the range of 5 mm or more and 100 mm or less may account for 50% or more, 60% or more, 70% or more, 80% or more, 90% or more, or 95% or more of the total weight of the carbon fibers contained in the carbon fiber mat impregnated with the thermosetting resin composition.

The carbon fiber mat impregnated with the thermosetting resin composition may contain SACFB having a bundle length of less than 5 mm, chopped carbon fiber bundles, and/or carbon fiber agglomerates in which the carbon fibers contained are not bundled, in addition to SACFB having a bundle length of 5 mm or more and 100 mm or less.

The carbon fiber mat impregnated with the thermosetting resin composition preferably contains carbon fibers with a filament length of 5 mm or more, more preferably contains carbon fibers with a filament length of 10 mm or more, and even more preferably contains carbon fibers with a filament length of 20 mm or more. This is because the longer the filament length, the higher the reinforcing effect of the carbon fibers.

From the viewpoint of increasing the fluidity exhibited when the long sheet prepreg is used for molding, it is preferable that all of the fibers contained in the carbon fiber mat impregnated with the thermosetting resin composition, including the carbon fibers, have a filament length of 50 mm or less, more preferably has a filament length of 40 mm or less, and even more preferably has a filament length of 30 mm or less.

The carbon fibers contained in the carbon fiber mat impregnated with the thermosetting resin composition may be all recycled carbon fibers, some of them may be recycled carbon fibers and the remaining part may be virgin carbon fibers, or all of them may be virgin carbon fibers. The recycled carbon fibers may be thermally deteriorated during the recovery process.

The carbon fiber mat impregnated with the thermosetting resin composition preferably contains only carbon fibers as a fiber component, but it is acceptable to contain fibers other than carbon fibers, such as glass fibers, unless there is a particular problem. The content of fibers other than carbon fibers in the carbon fiber mat is preferably less than 10 wt%, more preferably less than 5 wt%, and even more preferably less than 1 wt%.

Examples of base resins that may be contained in the thermosetting resin composition impregnated with the carbon fiber mat include vinyl ester resins (also called epoxy acrylate resins), unsaturated polyester resins, epoxy resins, and phenolic resins. Although not limited thereto, it is preferable to use a combination of vinyl ester resins and unsaturated polyester resins.

The thermosetting resin composition is preferably blended with a thickener in addition to a curing agent. Curing agents and thickeners suitable for each of the above resins exemplified as base resins are well known, and prior art in the field of SMC can be referenced, for example.

Examples of optional components that may be contained in the thermosetting resin composition include polymerization inhibitors, reactive diluents, low shrinkage agents, flame retardants, colorants, and antibacterial agents.

Thermosetting resin composition contained in the long sheet prepreg may be in a thickened state due to the action of the added curing agent and/or thickener.

The long sheet prepreg is cut to an appropriate length as necessary and used to produce CFRP products. In a preferred example, a CFRP product having a predetermined shape can be produced by placing the prepreg pieces obtained by cutting the long sheet prepreg in a molding die and curing it by heating while compressing it. In another example, a long sheet prepreg can be used as an intermediate material when molding a CFRP product using an autoclave.

### 2. Method for supplying fiber raw material

One embodiment of the present invention relates to a method for continuously and quantitatively supplying fiber raw material containing carbon fiber bundles having a bundle length in the range of 5 mm or more and 100 mm or less, and includes transporting the fiber raw material to its discharge end using a conveyor belt having an uneven conveying surface and an upwardly sloping section.

In the aforementioned method for producing sheet prepreg according to the embodiment, this supply method is used to supply fiber raw material containing carbon fiber bundles having a bundle length in the range of 5 mm or more and 100 mm or less.

### 3. Experimental Results

The results of the experiments conducted by the inventors are described below.

### (1) Preparation of fiber raw material

A bulk product of about 12 kg containing essentially only wire-shaped SACFB was prepared by mixing carbon fiber with bundling liquid and drying the mixture.

Both recycled carbon fiber and virgin carbon fiber were used as carbon fiber.

The recycled carbon fiber was a fluffy carbon fiber recovered by removing the matrix resin by pyrolysis from CF-SMC using chopped carbon fiber bundles having carbon fiber filament lengths of 2.5 cm.

The virgin carbon fiber was a chopped carbon fiber bundle with carbon fiber filament lengths of 2.5 cm obtained by cutting a continuous carbon fiber bundle consisting of 15,000 carbon fiber filaments at equal intervals.

The bundling liquid used was an aqueous dispersion containing a sizing agent mainly composed of polyurethane, with two types of water contents, one with a water content of 90 wt% and the other with a water content of 78 wt%.

A high-speed mixing machine with a 75 liter mixing tank (Intensive Mixer R08W, Nippon Airich Co., Ltd.) was used to mix the carbon fiber and the bundling liquid.

The bulk product was produced using the following procedure.

### (i) Mixing of recycled carbon fiber and bundling liquid

6,000 g of recycled carbon fiber was placed in the mixing tank of the mixer, and then, while the mixer was operated at a pan rotation speed of 24 rpm and a rotor rotation speed of 160 rpm, 2,700 g of bundling liquid (water content: 90 wt%) was added to the mixing tank by spraying over a period of about 9 minutes. The mixture was further stirred at a pan rotation speed of 24 rpm and a rotor rotation speed of 600 rpm for 10 minutes, and the recycled carbon fiber and bundling liquid were thoroughly mixed, forming countless wet wire-like carbon fiber bundles. The mixture of recycled carbon fiber and bundling liquid was once removed from the mixing tank.

### (ii) Mixing of virgin carbon fiber and bundling liquid

6000g of chopped carbon fiber bundles were placed in the mixing tank of the mixer, and the mixer was operated for 1 minute at a pan rotation speed of 24 rpm and a rotor rotation speed of 160 rpm to loosen the chopped carbon fiber bundles into a fluffy form. Next, while operating the mixer under the same conditions, 1200g of bundling liquid (water content: 78 wt%) was added to the mixing tank by spraying over a period of about 9 minutes. Further, the mixture was stirred for 10 minutes at a pan rotation speed of 24 rpm and a rotor rotation speed of 600 rpm to thoroughly mix the virgin carbon fiber and the bundling liquid, forming countless wet wire-like carbon fiber bundles.

### (iii) Drying

The mixture of recycled carbon fiber and bundling liquid obtained in (i) above was added to the mixing tank of the mixer containing the mixture of virgin carbon fiber and bundling liquid obtained in (ii) above, and the mixture was stirred for 4 minutes at a pan rotation speed of 24 rpm and a rotor rotation speed of 600 rpm. The contents of the mixing tank were then removed from the mixer and dried at 120°C using a vertical dryer, resulting in a bulk product essentially containing only wire-like SACFB.

50 SACFB were picked up from this bulk product and their bundle lengths were measured, and the average value was calculated to be 27.8 mm.

This bulk product was used as a fiber raw material in the formation of a carbon fiber mat, which will be described later.

### (2) Preparation of resin paste

A resin paste was prepared as a thermosetting resin composition, containing a vinyl ester resin and an unsaturated polyester resin as thermosetting resins, styrene as a reactive diluent, diphenylmethane diisocyanate as a thickener, and a radical polymerization initiator as a hardener. When preparing the resin paste, a primary composition containing all the components except the thickener was prepared first, and the thickener was added to the primary composition immediately before use, so that the viscosity of the resin paste would not exceed 1 Pa·s when impregnating the carbon fiber mat.

### (3) Carbon fiber mat

An inclined belt conveyor was prepared, which was equipped with a spiked lattice belt, had a distance of 700 mm from the rear end to the discharge end (tip), and only had an upwardly sloping section with a gradient angle of 67°. Each slat of the spiked lattice belt was 25 mm wide and 330 mm long, and the slat pitch was 27 mm. Each slat had spikes with a diameter of 3 mm and a length of 8 mm arranged at 16 mm intervals at its base along its length. Each spike was fixed to the slat so that it was inclined 50° from the normal to the conveying surface of the belt conveyor toward the conveying direction.

While the inclined belt conveyor was moving at a speed of 9 m/min, the fiber raw material prepared in (1) above was supplied to the rear end of the inclined belt conveyor using a separately prepared horizontal belt conveyor. At the same time, the release paper pulled out from the roll was run at a speed of 3 m/min so as to pass under the discharge end, which was the front end of the inclined belt conveyor. The release paper was held so that its surface was horizontal, and its running direction was perpendicular to the T direction of the inclined belt conveyor.

The fiber raw material discharged from the discharge end of the inclined belt conveyor was passed between two side plates, both of which were parallel to the running direction of the release paper and whose lower ends were lightly in contact with the surface of the release paper, and then dropped onto the release paper. When the distance between the two side plates was set to 0.3 **m,** a carbon fiber mat with a width of 0.3 m was formed on the release paper. The "width" here refers to the dimension perpendicular to the running direction of the release paper.

A carbon fiber mat with a width of 0.3 m was formed on the release paper with a length of approximately 1.4 m using the above procedure, and both ends in the longitudinal direction were removed so that the length was 1.2 m. Next, a quick-drying spray adhesive was sprayed onto the carbon fiber mat on the release paper to prevent it from losing its shape. The amount of adhesive attached to the carbon fiber mat was 10 to 20 g/m², and an effect thereof on the weight per unit length of the sheet prepreg described below was negligible.

### (4) Sheet prepreg

Six sheet prepregs were produced using six carbon fiber mats obtained by repeating the above procedure (3) six times. The production procedure for each sheet prepreg is as follows.

Two polyethylene films (one will be referred to as "PE film A" and the other as "PE film B" below) were pulled out from the rolls, and a doctor blade was used to apply resin paste to one side of each so that the coating amount was 470 g/m².

One of the carbon fiber mats, measuring 1.2 m in length and 0.3 m in width, was transferred from the release paper to the PE film A with the side coated with the resin paste facing up. The PE film B was then placed on top of it to obtain a laminate in which the resin paste-coated sides of the PE film A and the PE film B faced each other with the carbon fiber mat sandwiched between them. This laminate was immediately compressed using a roll to impregnate the carbon fiber mat with the resin paste. The laminate was then left at room temperature for 7 days to thicken the resin paste that had soaked into the carbon fiber mat, completing the sheet prepreg.

The surface of the sheet prepreg was not sticky, and when the PE film A and the PE film B were peeled off from the sheet prepreg, no adhesion of the resin paste was observed on their surfaces.

### (5) Measurement of weight per unit length

The weight of each of the six sheet prepregs, each 1.2 m long and 0.3 m wide, produced using the above procedure was measured one by one, and then the weight per unit length of each sheet prepreg was obtained by dividing the weight by the length (1.2 m). The results are shown in Table 1 below.

**[Table 1]**

| | Weight[g] | Weight per unit length [g/m] |
|---|---|---|
| Sheet prepreg1 | 686 | 572 |
| Sheet prepreg2 | 683 | 569 |
| Sheet prepreg3 | 674 | 562 |
| Sheet prepreg4 | 702 | 585 |
| Sheet prepreg5 | 694 | 578 |
| Sheet prepreg6 | 707 | 589 |

The average value, standard deviation, and coefficient of variation of the weight per unit length for these six sheet prepregs were calculated to be 576 g/m, 9.3 g/m, and 1.6%, respectively. Here, the coefficient of variation is the standard deviation divided by the average value.

One of the six sheet prepregs was cut into four prepreg pieces, each 0.3 m long and 0.3 m wide, and the weight of each of the four prepreg pieces was measured one by one and divided by the length (0.3 m) to obtain the weight per unit length of each prepreg piece. The results are shown in Table 2 below.

**[Table 2]**

| | **Weight per unit length [g/m]** |
|---|---|
| **Prepreg piece1** | **583** |
| **Prepreg piece2** | **583** |
| **Prepreg piece3** | **580** |
| **Prepreg piece4** | **593** |

The average value, standard deviation, and coefficient of variation of the weight per unit length among these four prepreg pieces were calculated to be 585 g/m, 5.7 g/m, and 1.0%, respectively. Here, the coefficient of variation is the standard deviation divided by the average value.

In the same manner, the other five of the six sheet prepregs were cut into four prepreg pieces, and the coefficient of variation of the weight per unit length among these four pieces was examined. As a result, the coefficient of variation was 8% for one sheet prepreg, but 5% or less for the other four sheet prepregs.

### 4. Summary of the embodiment

Preferred embodiments of the present invention are described in the following items.
[Item 1] A method for continuously producing a sheet prepreg having a carbon fiber mat impregnated with a thermosetting resin composition, comprising: forming the carbon fiber mat by dropping a fiber raw material containing carbon fiber bundles A having a bundle length in the range of 5 mm or more and 100 mm or less onto a first carrier film while running the first carrier film along its longitudinal direction; and transporting the fiber raw material to a discharge end of a first belt conveyor having an uneven conveying surface and an upwardly sloping portion before dropping the fiber raw material onto the first carrier film, wherein the width direction of the first carrier film and the width direction of the conveyor belt are parallel to each other.
[Item 2] The method according to item 1, wherein the conveying surface with the uneven surface has a concave portion having a bottom surface and a convex portion protruding from the bottom surface, and when the uneven surface is plane viewed, an area ratio of the convex portion in the uneven surface to the uneven surface is 50% or less, and preferably 10% or less.
[Item 3] The method according to item 1, wherein the conveyor belt is a spiked lattice belt.
[Item 4] The method according to any one of items 1 to 3, wherein an amount of the fiber raw material reaching the discharge end of the first belt conveyor per unit time is limited by a steep inclination of the upwardly sloping section.
[Item 5] The method according to any one of items 1 to 4, further comprising using a scraping means to scrape off a part of the fiber raw material being conveyed by the first belt conveyor in a middle or at an upper end of the upwardly sloping section.
[Item 6] The method according to item 5, wherein the scraping means comprises a scraping roller comprising: a rotation axis parallel to a T direction of the first belt conveyor; a cylindrical part having a central axis which is the rotation axis; and, a plurality of blades arranged on an outer circumferential surface of the cylindrical part, each of the blades being parallel to the rotation axis.
[Item 7] The method according to any one of items 1 to 6, comprising dropping the fiber raw material from the discharge end of the first belt conveyor.
[Item 8] The method according to any one of items 1 to 7, wherein a dispersing means for dispersing the fiber raw material is disposed below the discharge end of the first belt conveyor.
[Item 9] The method according to item 8, wherein the dispersing means comprises a horizontal rod reciprocating along a direction perpendicular to its longitudinal direction in a horizontal plane.
[Item 10] The method according to any one of items 1 to 9, wherein a running speed of the first carrier film is lower than a belt running speed of the first belt conveyor.
[Item 11] The method according to any one of items 1 to 10, wherein the fiber raw material drops from the discharge end of the first belt conveyor onto the first carrier film.
[Item 12] The method according to any one of items 1 to 10, wherein the fiber raw material drops from the discharge end of the first belt conveyor onto a second belt conveyor having the same T direction as the first belt conveyor and preferably being a horizontal belt conveyor.
[Item 13] The method according to item 12, wherein a belt running speed of the second belt conveyor is lower than the belt running speed of the first belt conveyor and the running speed of the first carrier film is lower than the belt running speed of the second belt conveyor.
[Item 14] The method according to item 12 or 13, wherein the fiber raw material drops from a discharge end of the second belt conveyor onto the first carrier film.
[Item 15] The method according to any one of items 1 to 14, wherein a paste made of the thermosetting resin composition is applied to the surface of the first carrier film on which the carbon fiber mat is to be formed before the carbon fiber mat is formed.
[Item 16] The method according to item 15, wherein the paste of the thermosetting resin composition is applied to one side of a second carrier film, and, after the carbon fiber mat is formed, the first carrier film and the second carrier film are bonded together so that the surfaces on which the paste is applied face each other.
[Item 17] The method according to any one of items 1 to 16, wherein at least a part of the carbon fiber bundles A has a bundle length of 10 mm or more, and may further have a bundle length of 20 mm or more.
[Item 18] The method according to any one of items 1 to 17, wherein all of the carbon fiber bundles contained in the fiber raw material have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.
[Item 19] The method according to any one of items 1 to 18, wherein all of the fibers contained in the fiber raw material have a filament length of 50 mm or less, preferably 40 mm or less, and more preferably 30 mm or less.
[Item 20] The method according to any one of items 1 to 19, wherein 50 wt% or more of the fiber raw material is the carbon fiber bundle A, and 60 wt% or more, 70 wt% or more, 80 wt% or more, 90 wt% or more, or 95 wt% or more may be the carbon fiber bundle A.
[Item 21] The method according to any one of items 1 to 20, wherein the carbon fiber bundle A comprises chopped carbon fiber bundles.
[Item 22] The method according to any one of items 1 to 21, wherein the carbon fiber bundle A comprises self-assembled carbon fiber bundles.
[Item 23] The method according to any one of items 1 to 20, wherein the carbon fiber bundle A comprises only self-assembled carbon fiber bundles.
[Item 24] The method according to item 22 or 23, wherein the self-assembled carbon fiber bundle comprises a wire-shaped carbon fiber bundle.
[Item 25] The method according to any one of items 22 to 24, wherein the self-assembled carbon fiber bundle comprises recycled carbon fibers.
[Item 26] A method for continuously and quantitatively supplying a fiber raw material comprising carbon fiber bundles A having a bundle length in the range of 5 mm or more and 100 mm or less, comprising; transporting the fiber raw material by a first belt conveyor provided with a conveyer belt to a discharge end of the first belt conveyor, the conveyor belt having a conveying surface with an uneven surface and an upwardly sloping section.
[Item 27] The method according to item 26, wherein the conveying surface with the uneven surface has a concave portion having a bottom surface and a convex portion protruding from the bottom surface, and when the uneven surface is plane viewed, an area ratio of the convex portion in the uneven surface to the uneven surface is 50% or less, and preferably 10% or less.
[Item 28] The method according to item26, wherein the conveyor belt is a spiked lattice belt.
[Item 29] The method according to any one of items 26 to 28, wherein an amount of the fiber raw material reaching the discharge end of the first belt conveyor per unit time is limited by a steep inclination of the upwardly sloping section.
[Item 30] The method according to any one of items 26 to 29, further comprising scraping off a part of the fiber raw material being conveyed by the first belt conveyor using a scraping means in a middle or at an upper end of the upwardly sloping section.
[Item 31] The method according to item 30, wherein the scraping means comprises a scraping roller comprising: a rotation axis parallel to a T direction of the first belt conveyor; a cylindrical part having a central axis which is the rotation axis; and, a plurality of blades arranged on an outer circumferential surface of the cylindrical part, each of the blades being parallel to the rotation axis.
[Item 32] The method according to any one of items 26 to 31, comprising dropping the fiber raw material from the discharge end of the first belt conveyor.
[Item 33] The method according to any one of items 26 to 32, wherein a dispersing means for dispersing the fiber raw material is disposed below the discharge end of the first belt conveyor.
[Item 34] The method according to item 33, wherein the dispersing means comprises a horizontal rod reciprocating along a direction perpendicular to its longitudinal direction in a horizontal plane.
[Item 35] The method according to any one of items 26 to 34, wherein the fiber raw material drops from the discharge end of the first belt conveyor onto a second belt conveyor having the same T direction as the first belt conveyor and preferably being a horizontal belt conveyor.
[Item 36] The method according to item 35, wherein a belt running speed of the second belt conveyor is lower than the belt running speed of the first belt conveyor.
[Item 37] The method according to any one of items 26 to 36, wherein at least a part of the carbon fiber bundles A has a bundle length of 10 mm or more, and may further have a bundle length of 20 mm or more.
[Item 38] The method according to any one of items 26 to 37, wherein all of the carbon fiber bundles contained in the fiber raw material have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.
[Item 39] The method according to any one of items 26 to 38, wherein all of the fibers contained in the fiber raw material have a filament length of 50 mm or less, preferably 40 mm or less, and more preferably 30 mm or less.
[Item 40] The method according to any one of items 26 to 39, wherein 50 wt% or more of the fiber raw material is the carbon fiber bundle A, and 60 wt% or more, 70 wt% or more, 80 wt% or more, 90 wt% or more, or 95 wt% or more may be the carbon fiber bundle A.
[Item 41] The method according to any one of items 26 to 40, wherein the carbon fiber bundle A comprises chopped carbon fiber bundles.
[Item 42] The method according to any one of items 26 to 41, wherein the carbon fiber bundle A comprises self-assembled carbon fiber bundles.
[Item 43] The method according to any one of items 26 to 40, wherein the carbon fiber bundle A comprises only self-assembled carbon fiber bundles.
[Item 44] The method according to item 42 or 43, wherein the self-assembled carbon fiber bundle comprises a wire-shaped carbon fiber bundle.
[Item 45] The method according to any one of items 42 to 44, wherein the self-assembled carbon fiber bundle comprises recycled carbon fibers.
[Item 46] A method for producing a sheet prepreg, comprising: forming a carbon fiber mat on a first carrier film by supplying the fiber raw material onto the first carrier film running along its longitudinal direction by the method according to any one of items 26 to 45; and impregnating the carbon fiber mat with a thermosetting resin composition.
[Item 47] The producing method according to item 46, comprising applying a paste made of the thermosetting resin composition to the surface of the first carrier film on which the carbon fiber mat is to be formed before the carbon fiber mat is formed.
[Item 48] The producing method according to item 47, wherein the paste of the thermosetting resin composition is applied to one side of a second carrier film, and, after the carbon fiber mat is formed, the first carrier film and the second carrier film are bonded together so that the surfaces on which the paste is applied face each other.
[Item 49] A sheet prepreg having a length direction and a width direction, wherein a carbon fiber mat comprising self-assembled carbon fiber bundles having a bundle length in the range of 5 mm or more and 100 mm or less is impregnated with a thermosetting resin composition, and a coefficient of variation A of a weight per unit length of the sheet prepreg is 10% or less, preferably 8% or less, more preferably 6% or less, and even more preferably 5% or less, and the coefficient of variation A is a value obtained by dividing a standard deviation by an average value, and is based on four samples each having a length of 0.3 m taken from the sheet prepreg without any interval in the length direction.
[Item 50] The sheet prepreg according to item 49, wherein the coefficient of variation A is 0.01% or more.
[Item 51] The sheet prepreg according to item 49 or 50, wherein the length of the sheet prepreg is in the range of 5 m or more and 200 m or less.
[Item 52] The sheet prepreg according to any one of items 49 to 51, wherein the length of the sheet prepreg is 7.2 m or more, a coefficient of variation B of the weight per unit length of the sheet prepreg is 5% or less, preferably 4% or less, more preferably 3% or less, and even more preferably 2% or less, and the coefficient of variation B is a value obtained by dividing the standard deviation by an average value and is based on six samples each having a length of 1.2 m taken from the sheet prepreg without any interval in the length direction.
[Item 53] A sheet prepreg having a length direction and a width direction and a length of 7.2 m or more, wherein the sheet prepreg comprises a carbon fiber mat comprising self-assembled carbon fiber bundles having a bundle length in the range of 5 mm or more and 100 mm or less and a thermosetting resin composition impregnated wherein, and wherein a coefficient of variation B of a weight per unit length of the sheet prepreg is 5% or less, preferably 4% or less, more preferably 3% or less, and even more preferably 2% or less, and the coefficient of variation B is a value obtained by dividing a standard deviation by an average value, and is based on six samples each having a length of 1.2 m taken from the sheet prepreg without any interval in the length direction.
[Item 54] The sheet prepreg according to item 53, wherein a length of the sheet prepreg is 200 m or less.
[Item 55] The sheet prepreg according to any one of items 52 to 54, wherein the coefficient of variation B is 0.01% or more.
[Item 56] The sheet prepreg according to any one of items 49 to 55, wherein a width of the sheet prepreg is within a range of 0.3 m to 3 m.
[Item 57] The sheet prepreg according to any one of items 49 to 56, wherein at least a part of the self-assembled carbon fiber bundles has a bundle length of 10 mm or more, and may further have a bundle length of 20 mm or more.
[Item 58] The sheet prepreg according to any one of items 49 to 57, wherein 50% or more of the total weight of the carbon fibers comprised in the carbon fiber mat are the self-assembled carbon fiber bundles, and further 60% or more, 70% or more, 80% or more, 90% or more, or 95% or more may be the self-assembled carbon fiber bundles.
[Item 59] The sheet prepreg according to any one of items 49 to 58, wherein the self-assembled carbon fiber bundles comprise wire-shaped carbon fiber bundles.
[Item 60] The sheet prepreg according to any one of items 49 to 59, wherein all of the carbon fiber bundles comprised in the carbon fiber mat have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.
[Item 61] The sheet prepreg according to any one of items 49 to 60, wherein the carbon fiber mat comprises carbon fibers having a filament length of 5 mm or more, preferably carbon fibers having a filament length of 10 mm or more, and more preferably carbon fibers having a filament length of 20 mm or more.
[Item 62] The sheet prepreg according to any one of items 49 to 61, wherein all of the fibers contained in the carbon fiber mat have a filament length of 50 mm or less, preferably 40 mm or less, and more preferably 30 mm or less.
[Item 63] The sheet prepreg according to any one of items 49 to 62, wherein the carbon fiber mat comprises recycled carbon fibers.
[Item 64] The sheet prepreg according to any one of items 49 to 63, wherein the thermosetting resin composition comprises one or more resins selected from vinyl ester resins, unsaturated polyester resins, epoxy resins, and phenolic resins.
[Item 65] A method for producing a CFRP product using the sheet prepreg according to any one of items 49 to 64.

Although the present invention has been described above with reference to specific embodiments, each embodiment is presented as an example and does not limit the scope of the present invention. Each embodiment described in this specification can be variously modified within the scope where the effects of the invention can be achieved, and the features described in other embodiments may be combined within the scope of practicability.

### Industrial Applicability

The sheet prepreg produced using the method according to the embodiment can be used as an intermediate material when producing CFRP products using, for example, a compression molding method. The uses of CFRP products are diverse, including parts used in aircraft, automobiles, ships, and other various types of transportation equipment, as well as sports and leisure goods.

This application is based on Japanese Patent Application No. 2022-200806 filed on December 16, 2022, and is incorporated by reference in its entirety.

### Reference Numeral List

- 1: Sheet prepreg producing equipment
- 1A: Fiber raw material supply section
- 1B: Impregnation section
- 10: First belt conveyor
- 11: Conveyor belt
- 11a: Transport surface
- 20: Scraping roller
- 30: Horizontal rod
- 40: Second belt conveyor
- 41: Conveyor belt
- 50: First coater
- 60: Second coater
- 70: Laminating machine
- 80: Impregnation machine

## Claims

1. A method for continuously producing a sheet prepreg comprising a carbon fiber mat and a thermosetting resin composition impregnated therein, comprising:
dropping a fiber raw material comprising carbon fiber bundles A having a bundle length in the range of 5 mm or more and 100 mm or less onto a first carrier film while running the first carrier film along its longitudinal direction to form the carbon fiber mat; and,
before dropping the fiber raw material onto the first carrier film, transporting the fiber raw material by a first belt conveyor to a discharge end of the first belt conveyor, the first belt conveyor having a conveying surface with an uneven surface and an upwardly sloping section,
wherein a width direction of the first carrier film and a width direction of the first conveyor belt are parallel to each other.

2. The method according to claim 1, wherein the conveying surface with the uneven surface has a concave portion having a bottom surface and a convex portion protruding from the bottom surface, and
When the uneven surface is plane viewed, an area ratio of the convex portion in the uneven surface to the uneven surface is 50% or less, and preferably 10% or less.

3. The method according to claim 1, wherein the conveyor belt is a spiked lattice belt.

4. The method according to any one of claims 1 to 3, wherein an amount of the fiber raw material reaching the discharge end of the first belt conveyor per unit time is limited by a steep inclination of the upwardly sloping section.

5. The method according to any one of claims 1 to 4, further comprising using a scraping means to scrape off a part of the fiber raw material being conveyed by the first belt conveyor in a middle or at an upper end of the upwardly sloping section.

6. The method according to claim 5, wherein the scraping means comprises a scraping roller comprising: a rotation axis parallel to a T direction of the first belt conveyor; a cylindrical part having a central axis which is the rotation axis; and, a plurality of blades arranged on an outer circumferential surface of the cylindrical part, each of the blades being parallel to the rotation axis.

7. The method according to any one of claims 1 to 6, comprising dropping the fiber raw material from the discharge end of the first belt conveyor.

8. The method according to any one of claims 1 to 7, wherein a dispersing means for dispersing the fiber raw material is disposed below the discharge end of the first belt conveyor.

9. The method according to claim 8, wherein the dispersing means comprises a horizontal rod reciprocating along a direction perpendicular to its longitudinal direction in a horizontal plane.

10. The method according to any one of claims 1 to 9, wherein a running speed of the first carrier film is lower than a belt running speed of the first belt conveyor.

11. The method according to any one of claims 1 to 10, wherein the fiber raw material drops from the discharge end of the first belt conveyor onto the first carrier film.

12. The method according to any one of claims 1 to 10, wherein the fiber raw material drops from the discharge end of the first belt conveyor onto a second belt conveyor having the same T direction as the first belt conveyor and preferably being a horizontal belt conveyor.

13. The method according to claim 12, wherein a belt running speed of the second belt conveyor is lower than the belt running speed of the first belt conveyor and the running speed of the first carrier film is lower than the belt running speed of the second belt conveyor.

14. The method according to claim 12 or 13, wherein the fiber raw material drops from a discharge end of the second belt conveyor onto the first carrier film.

15. The method according to any one of claims 1 to 14, wherein a paste made of the thermosetting resin composition is applied to the surface of the first carrier film on which the carbon fiber mat is to be formed before the carbon fiber mat is formed.

16. The method according to claim 15, wherein the paste of the thermosetting resin composition is applied to one side of a second carrier film, and, after the carbon fiber mat is formed, the first carrier film and the second carrier film are bonded together so that the surfaces on which the paste is applied face each other.

17. The method according to any one of claims 1 to 16, wherein at least a part of the carbon fiber bundles A has a bundle length of 10 mm or more, and may further have a bundle length of 20 mm or more.

18. The method according to any one of claims 1 to 17, wherein all of the carbon fiber bundles contained in the fiber raw material have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.

19. The method according to any one of claims 1 to 18, wherein all of the fibers contained in the fiber raw material have a filament length of 50 mm or less, preferably 40 mm or less, and more preferably 30 mm or less.

20. The method according to any one of claims 1 to 19, wherein 50 wt% or more of the fiber raw material is the carbon fiber bundle **A,** and 60 wt% or more, 70 wt% or more, 80 wt% or more, 90 wt% or more, or 95 wt% or more may be the carbon fiber bundle **A.**

21. The method according to any one of claims 1 to 20, wherein the carbon fiber bundle A comprises chopped carbon fiber bundles.

22. The method according to any one of claims 1 to 21, wherein the carbon fiber bundle A comprises self-assembled carbon fiber bundles.

23. The method according to any one of claims 1 to 20, wherein the carbon fiber bundle A comprises only self-assembled carbon fiber bundles.

24. The method according to claim 22 or 23, wherein the self-assembled carbon fiber bundle comprises a wire-shaped carbon fiber bundle.

25. The method according to any one of claims 22 to 24, wherein the self-assembled carbon fiber bundle comprises recycled carbon fibers.

26. A method for continuously and quantitatively supplying a fiber raw material comprising carbon fiber bundles A having a bundle length in the range of 5 mm or more and 100 mm or less, comprising;
transporting the fiber raw material by a first belt conveyor provided with a conveyer belt to a discharge end of the first belt conveyor, the conveyor belt having a conveying surface with an uneven surface and an upwardly sloping section.

27. The method according to claim 26, wherein the conveying surface with the uneven surface has a concave portion having a bottom surface and a convex portion protruding from the bottom surface, and
when the uneven surface is plane viewed, an area ratio of the convex portion in the uneven surface to the uneven surface is 50% or less, and preferably 10% or less.

28. The method according to claim 26, wherein the conveyor belt is a spiked lattice belt.

29. The method according to any one of claims 26 to 28, wherein an amount of the fiber raw material reaching the discharge end of the first belt conveyor per unit time is limited by a steep inclination of the upwardly sloping section.

30. The method according to any one of claims 26 to 29, further comprising scraping off a part of the fiber raw material being conveyed by the first belt conveyor using a scraping means in a middle or at an upper end of the upwardly sloping section.

31. The method according to claim 30, wherein the scraping means comprises a scraping roller comprising: a rotation axis parallel to a T direction of the first belt conveyor; a cylindrical part having a central axis which is the rotation axis; and, a plurality of blades arranged on an outer circumferential surface of the cylindrical part, each of the blades being parallel to the rotation axis.

32. The method according to any one of claims 26 to 31, comprising dropping the fiber raw material from the discharge end of the first belt conveyor.

33. The method according to any one of claims 26 to 32, wherein a dispersing means for dispersing the fiber raw material is disposed below the discharge end of the first belt conveyor.

34. The method according to claim 33, wherein the dispersing means comprises a horizontal rod reciprocating along a direction perpendicular to its longitudinal direction in a horizontal plane.

35. The method according to any one of claims 26 to 34, wherein the fiber raw material drops from the discharge end of the first belt conveyor onto a second belt conveyor having the same T direction as the first belt conveyor and preferably being a horizontal belt conveyor.

36. The method according to claim 35, wherein a belt running speed of the second belt conveyor is lower than the belt running speed of the first belt conveyor.

37. The method according to any one of claims 26 to 36, wherein at least a part of the carbon fiber bundles A has a bundle length of 10 mm or more, and may further have a bundle length of 20 mm or more.

38. The method according to any one of claims 26 to 37, wherein all of the carbon fiber bundles contained in the fiber raw material have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.

39. The method according to any one of claims 26 to 38, wherein all of the fibers contained in the fiber raw material have a filament length of 50 mm or less, preferably 40 mm or less, and more preferably 30 mm or less.

40. The method according to any one of claims 26 to 39, wherein 50 wt% or more of the fiber raw material is the carbon fiber bundle A, and 60 wt% or more, 70 wt% or more, 80 wt% or more, 90 wt% or more, or 95 wt% or more may be the carbon fiber bundle A.

41. The method according to any one of claims 26 to 40, wherein the carbon fiber bundle A comprises chopped carbon fiber bundles.

42. The method according to any one of claims 26 to 41, wherein the carbon fiber bundle A comprises self-assembled carbon fiber bundles.

43. The method according to any one of claims 26 to 40, wherein the carbon fiber bundle A comprises only self-assembled carbon fiber bundles.

44. The method according to claim 42 or 43, wherein the self-assembled carbon fiber bundle comprises a wire-shaped carbon fiber bundle.

45. The method according to any one of claims 42 to 44, wherein the self-assembled carbon fiber bundle comprises recycled carbon fibers.

46. A method for producing a sheet prepreg, comprising: forming a carbon fiber mat on a first carrier film by supplying the fiber raw material onto the first carrier film running along its longitudinal direction by the method according to any one of claims 26 to 45; and impregnating the carbon fiber mat with a thermosetting resin composition.

47. The producing method according to claim 46, comprising applying a paste made of the thermosetting resin composition to the surface of the first carrier film on which the carbon fiber mat is to be formed before the carbon fiber mat is formed.

48. The producing method according to claim 47, wherein the paste of the thermosetting resin composition is applied to one side of a second carrier film, and, after the carbon fiber mat is formed, the first carrier film and the second carrier film are bonded together so that the surfaces on which the paste is applied face each other.

49. A sheet prepreg having a length direction and a width direction, wherein a carbon fiber mat comprising self-assembled carbon fiber bundles having a bundle length in the range of 5 mm or more and 100 mm or less is impregnated with a thermosetting resin composition, and a coefficient of variation A of a weight per unit length of the sheet prepreg is 10% or less, preferably 8% or less, more preferably 6% or less, and even more preferably 5% or less, and the coefficient of variation A is a value obtained by dividing a standard deviation by an average value, and is based on four samples each having a length of 0.3 m taken from the sheet prepreg without any interval in the length direction.

50. The sheet prepreg according to claim 49, wherein the coefficient of variation A is 0.01% or more.

51. The sheet prepreg according to claim 49 or 50, wherein the length of the sheet prepreg is in the range of 5 m or more and 200 m or less.

52. The sheet prepreg according to any one of claims 49 to 51, wherein the length of the sheet prepreg is 7.2 m or more, a coefficient of variation B of the weight per unit length of the sheet prepreg is 5% or less, preferably 4% or less, more preferably 3% or less, and even more preferably 2% or less, and the coefficient of variation B is a value obtained by dividing the standard deviation by an average value and is based on six samples each having a length of 1.2 m taken from the sheet prepreg without any interval in the length direction.

53. A sheet prepreg having a length direction and a width direction and a length of 7.2 m or more,
wherein the sheet prepreg comprises a carbon fiber mat comprising self-assembled carbon fiber bundles having a bundle length in the range of 5 mm or more and 100 mm or less and a thermosetting resin composition impregnated wherein, and
wherein a coefficient of variation B of a weight per unit length of the sheet prepreg is 5% or less, preferably 4% or less, more preferably 3% or less, and even more preferably 2% or less, and the coefficient of variation B is a value obtained by dividing a standard deviation by an average value, and is based on six samples each having a length of 1.2 m taken from the sheet prepreg without any interval in the length direction.

54. The sheet prepreg according to claim 53, wherein a length of the sheet prepreg is 200 m or less.

55. The sheet prepreg according to any one of claims 52 to 54, wherein the coefficient of variation B is 0.01% or more.

56. The sheet prepreg according to any one of claims 49 to 55, wherein a width of the sheet prepreg is within a range of 0.3 m to 3 m.

57. The sheet prepreg according to any one of claims 49 to 56, wherein at least a part of the self-assembled carbon fiber bundles has a bundle length of 10 mm or more, and may further have a bundle length of 20 mm or more.

58. The sheet prepreg according to any one of claims 49 to 57, wherein 50% or more of the total weight of the carbon fibers comprised in the carbon fiber mat are the self-assembled carbon fiber bundles, and further 60% or more, 70% or more, 80% or more, 90% or more, or 95% or more may be the self-assembled carbon fiber bundles.

59. The sheet prepreg according to any one of claims 49 to 58, wherein the self-assembled carbon fiber bundles comprise wire-shaped carbon fiber bundles.

60. The sheet prepreg according to any one of claims 49 to 59, wherein all of the carbon fiber bundles comprised in the carbon fiber mat have a bundle length of 100 mm or less, and may further have a bundle length of 90 mm or less, 80 mm or less, 70 mm or less, 60 mm or less, 50 mm or less, 40 mm or less, or 30 mm or less, preferably 60 mm or less, more preferably 40 mm or less, and even more preferably 30 mm or less.

61. The sheet prepreg according to any one of claims 49 to 60, wherein the carbon fiber mat comprises carbon fibers having a filament length of 5 mm or more, preferably carbon fibers having a filament length of 10 mm or more, and more preferably carbon fibers having a filament length of 20 mm or more.

62. The sheet prepreg according to any one of claims 49 to 61, wherein all of the fibers contained in the carbon fiber mat have a filament length of 50 mm or less, preferably 40 mm or less, and more preferably 30 mm or less.

63. The sheet prepreg according to any one of claims 49 to 62, wherein the carbon fiber mat comprises recycled carbon fibers.

64. The sheet prepreg according to any one of claims 49 to 63, wherein the thermosetting resin composition comprises one or more resins selected from vinyl ester resins, unsaturated polyester resins, epoxy resins, and phenolic resins.

65. A method for producing a CFRP product using the sheet prepreg according to any one of claims 49 to 64.
